(19) **Europäisches Patentamt / European Patent Office / Office européen des brevets**

(11) **EP 2 320 267 A1**

(12) **EUROPEAN PATENT APPLICATION**

(43) Date of publication:
**11.05.2011 Bulletin 2011/19**

(51) Int Cl.:
***G02F 1/1334*** (2006.01)

(21) Application number: **10167295.4**

(22) Date of filing: **25.06.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **10.11.2009 JP 2009257533**

(71) Applicant: **Sony Ericsson Mobile Communications AB
221 88 Lund (SE)**

(72) Inventor: **Ogita, Takeshi
Minato-Ku, Tokyo (JP)**

(74) Representative: **Jackson, Jonathan Andrew
D Young & Co LLP
120 Holborn
London EC1N 2DY (GB)**

(54) **Liquid crystal module and electronic apparatus**

(57)    A liquid crystal module including a polymer-dispersed liquid crystal device as a component of a transparent display, and an electronic apparatus equipped with the liquid crystal module. The liquid crystal module includes: a liquid crystal panel that performs gradation display between transparent color and white using the polymer-dispersed liquid crystal device; and a driving section that drives the liquid crystal panel. The driving section includes a gradation conversion section that relates a plurality of input gradation values between transparent color and white with a plurality of output gradation values between a minimum opacity and a maximum opacity individually. The gradation conversion section employs an S-shaped curve that defines the relation between the input gradation values and the output gradation values.

FIG. 6

EP 2 320 267 A1

## Description

The present invention relates to a liquid crystal module and an electronic apparatus equipped with the liquid crystal module.

In recent years, liquid crystal displays (LCD displays) equipped with a liquid crystal panel have been widely used as display devices of a flat panel shape. A liquid crystal panel displays images by blocking some components of light emitted from a light source or external light and transmitting other components with the use of constituents of the liquid crystal.

Recently, a so-called transparent display, on which information is displayed when it is on and the back face of the display can be seen through when it is off, has been developed. Among some kinds of transparent displays, a transparent display that employs polymer-dispersed liquid crystal (or polymer network liquid crystal) has been coming into practical use. Polymer-dispersed liquid crystal has a property that the liquid crystal disperses incident light when an voltage is not applied to the liquid crystal, and the liquid crystal lets the incident light pass therethrough when a voltage is applied to the liquid crystal (see, for example, Japanese Patent Application Publication No. 5-100118.

A problem has been found in that, if gamma is set for the above-mentioned transparent display similarly as for an ordinary LCD display (for example, γ (gamma) = 2.2), the thickness of displayed images becomes thin, with the result that the visibility of the displayed images becomes poor. Gamma is a value that determines an output gradation value corresponding to an input gradation value (gray scale value) in an LCD display A gamma curve is a characteristic curve that shows a relation between output gradation values and input gradation values.

The deterioration of the visibility of the transparent display is assumed to be due to the fact that the polymer-dispersed liquid crystal used in the transparent display has characteristics of (1) transparent color display, (2) dispersion, and (3) monochrome display different from those of liquid crystal used in the ordinary LCD display.

The present invention provides a liquid crystal module including a polymer-dispersed liquid crystal device as a component of a transparent display, and an electronic apparatus equipped with the liquid crystal module, where a gamma curve, which is used for configuring the liquid crystal module and very useful to improve visual quality of displayed images, is provided, thereby the gamma curve can be said to be proprietary to the transparent display.

A liquid crystal module according to an embodiment of the present invention includes: a liquid crystal panel that performs gradation display between transparent color and white using a polymer-dispersed liquid crystal device; and a driving section that drives the liquid crystal panel. The driving section includes a gradation conversion section that relates a plurality of input gradation values between the transparent color and the white with a plurality of output gradation values between a minimum opacity and a maximum opacity individually. In addition, the gradation conversion section employs an S-shaped curve that defines the relation between the input gradation values and the output gradation values.

By setting the relation between the input gradation values and the output gradation values to be of a S-shaped curve, gray scale images, which are displayed in the liquid crystal panel that performs gradation display between transparent color and white using the polymer-dispersed liquid crystal device, has a good viewability of gray scale images and an improved visual quality of the displayed images.

An embodiment of the present invention is configured so that an output gradation range corresponding to a first input gradation range from an input gradation value corresponding to the transparent color to a predefined gradation value is set to be wider than a linear output gradation range corresponding to the first input gradation range; and an output gradation range corresponding to a second input gradation range from the predefined gradation value to an input gradation value corresponding to the white is set to be narrower than a linear output gradation range corresponding to the second input gradation range.

Another embodiment of the present invention is configured so that, when an input gradation value changes from a value within a second input gradation range that is located outside a first input gradation range to a value within the first input gradation range, if an output display within a first output gradation range corresponding the value within the first input gradation range is affected by an output display within a second output gradation range corresponding the value within the second input gradation range, the input gradation range corresponding to the first output gradation range is set to be narrower than a linear input gradation range corresponding to the first output gradation range.

Another embodiment of the present invention provides an electronic apparatus equipped with the above-described liquid crystal module as a display device.

According to an embodiment of the present invention, by setting a gamma curve that is proprietary to a liquid crystal panel, which performs gradation display between transparent color and white using the polymer-dispersed liquid crystal device, and that is different from gamma curves used for adjusting the quality of images of related LCD displays, the liquid crystal panel can provide an improved visual quality of the displayed images and easiness for a user to recognize displayed information.

Preferably, the liquid crystal module of improved display quality included in a so-called transparent display.

Various respective aspects and features of the invention are defined in the appended claims. Combinations of features from the dependent claims may be combined with features of the independent claims as appropriate and not merely as explicitly set out in the claims.

Embodiments of the invention will now be described with reference to the accompanying drawings, throughout which like parts are referred to by like references, and in which:

FIG. 1A is a perspective view showing the front face of a cellular phone terminal as an example of an electronic apparatus equipped with a transparent display according to an embodiment of the present invention;

FIG. 1B is a perspective view showing the back face of the cellular phone terminal;

FIG. 2A is a diagram showing a front face of the display section of the terminal in FIG. 1;

FIG. 2B is a diagram showing a back face of the display section of the terminal in FIG. 1;

FIG. 3A is a diagram showing the behavior of the display section of the terminal in a transparent mode;

FIG. 3B is a diagram showing the behavior of the display section of the terminal in a dispersion mode;

FIG. 4 is a diagram showing a state of the transparent display in which some pieces of information are displayed;

FIG. 5A is a diagram showing an example of a gamma curve for an ordinary LCD display;

FIG. 5B is a diagram showing an example of a gamma curve, which is the same as the gamma curve for the ordinary LCD display in FIG. 5A, applied to an LCD display including the polymer-dispersed liquid crystal device.

FIG. 5C is a diagram showing an example of a gamma curve according to the embodiment of the present invention;

FIG. 6 is a diagram showing five patterns of gamma curves used for an experiment for examining a visual quality of displayed images;

FIG. 7 is a diagram showing a statistical result of a relation between gradation values and counts;

FIG. 8A is an explanatory diagram showing an example of a hysteresis generated in the polymer-dispersed liquid crystal device;

FIG. 8B is an explanatory diagram showing another example of the hysteresis generated in the polymer-dispersed liquid crystal device;

FIG. 9A is a diagram showing a hysteresis generating area when the gamma curve shown in FIG. 5C is used;

FIG. 9B is a diagram showing a gamma curve that narrows an input gradation range where the hysteresis may be generated on the basis of results of hysteresis examinations; and

FIG. 10 is a block diagram showing a schematic configuration of main sections of the liquid crystal module for adjusting an image quality according to the embodiment of the present invention.

An embodiment of the present invention will be described hereinafter with reference to the drawings.

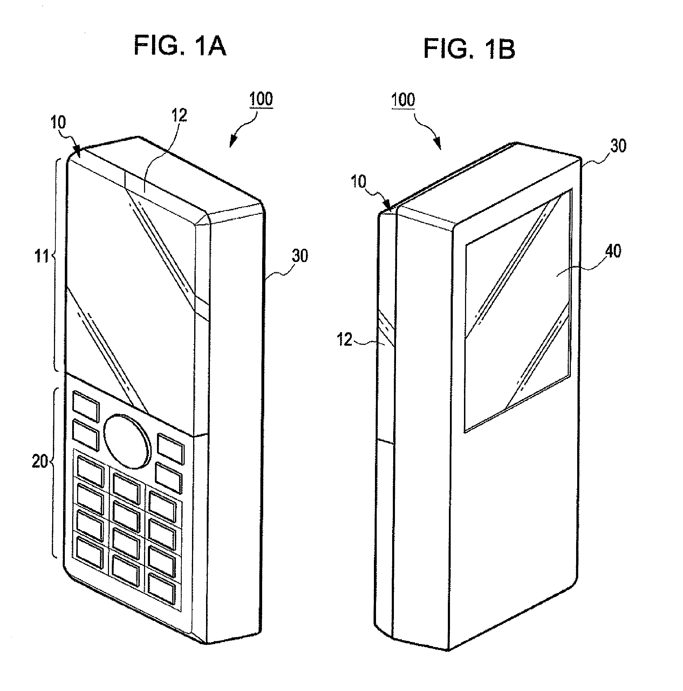

FIG. 1A is a perspective view showing the front face of a cellular phone terminal as an example of an electronic apparatus equipped with a transparent display according to an embodiment of the present invention. FIG. 1B is a perspective view showing the back face of the cellular phone terminal.

A cellular phone terminal (hereinafter simply referred to as a terminal) 100 is a so-called straight terminal, and includes a liquid crystal module 10 at the front face side of a chassis 30, and an operation section 20 in a lower section thereof. The liquid crystal module has an all-in-one structure in which a liquid crystal panel, electronic circuits for generating image signals and providing driving electrical power, a light source used for a back light, and the like are integrated into a single unit. A transparent plate 12, which constitutes part of the liquid crystal module 10, includes a display section 11. The display section 11 constitutes part of a display screen along with the liquid crystal panel (not shown in FIG. 1) that is located behind the transparent plate 12 and superimposed on the display section 11. As a material for the transparent plate 12, a synthetic resin such as an acrylic, a glass, or the like can be used.

This terminal 100 includes a transparent window section 40 that is located on the back face of the chassis opposite and facing the display section 11 on the front face. In other words, the window section 40 constitutes part of the transparent display, and the front face side can be seen from the back face side of the chassis through the display screen and the window section 40 depending on the display condition of the liquid crystal. The liquid crystal panel according to this embodiment of the present invention makes use of polymer-dispersed liquid crystal. Although the window section 40 may be left blank, it can be made of a transparent panel material similar to the material used for the transparent plate 12.

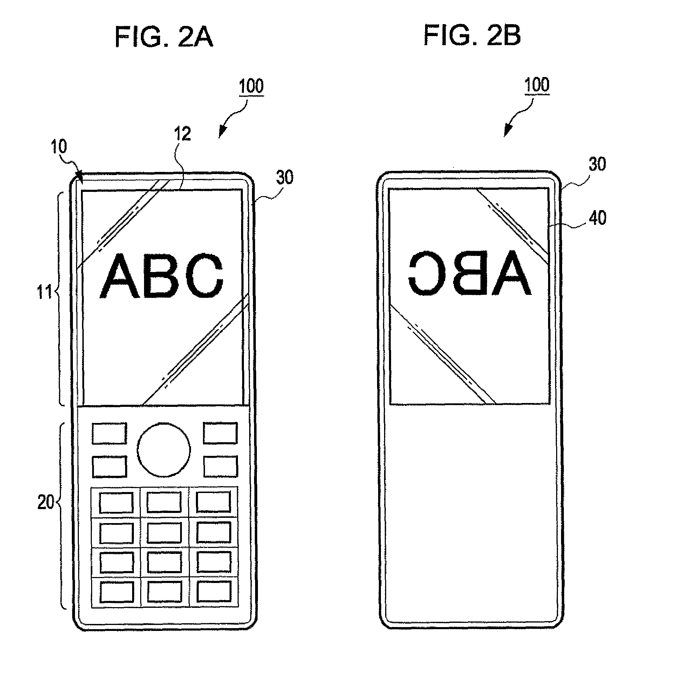

As shown in FIG. 2A and FIG. 2B, the image displayed on the display section 11 on the front face of the terminal 100 can be seen through the window section 40 on the back face as a mirror-reversed image of the image displayed on the display section 11.

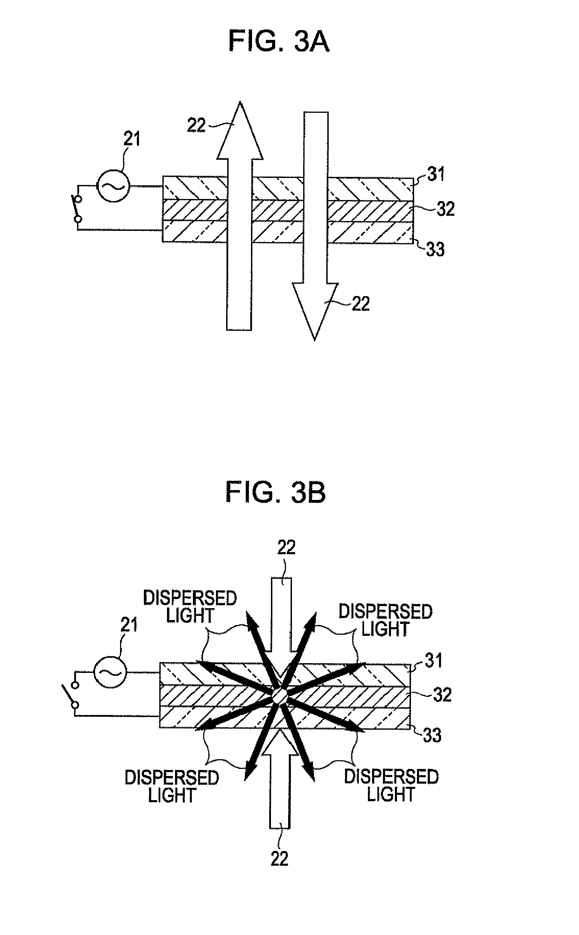

FIG. 3A and FIG. 3B are explanatory diagrams of operation of the polymer-dispersed liquid crystal. The liquid crystal panel is composed of a polymer-dispersed liquid crystal material 32 that is sandwiched between glass plates 31 and 33, to each of which an electrode is attached. When a voltage is applied between the electrodes of the glass plates 31 and 33, the polymer-dispersed liquid crystal material 32 goes into a transparent mode, thereby allowing light to pass through the liquid crystal panel from the back face to the front face of the terminal and vice versa as shown in FIG. 3A. When a voltage is not applied between the electrodes of the glass plates 31 and 33, the polymer-dispersed liquid crystal material 32 goes into a dispersion mode, and the light entering from the back face (or from the front face) is dispersed in all directions as shown in FIG. 3B. In this case, if the entering light is ordinary light, the dispersed light is observed to be white light.

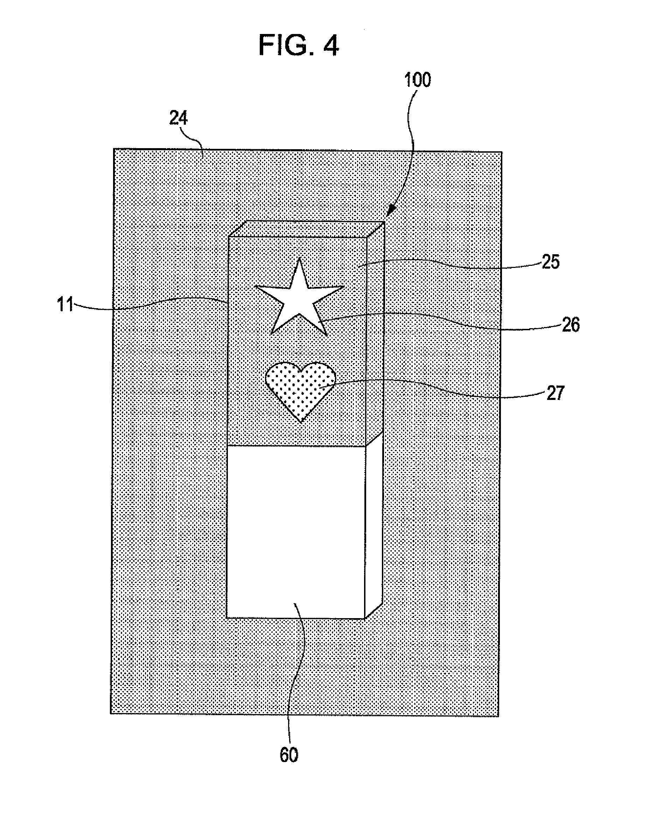

FIG. 4 shows a state of the transparent display in which some pieces of information are displayed. The display unit of the terminal 100 is composed of the display section 11 including the liquid crystal panel made of the polymer-dispersed liquid crystal and a liquid crystal driving section (driving means) 60 that drives the liquid crystal panel. Because a background 24 can be seen through a transparent portion (a group of pixels in which the voltage is applied to the liquid crystal) 25, and the background is not seen through a white portion (another group of pixels in which the voltage is not applied to the liquid crystal) 26, a piece of information can be displayed and recognized. In addition, if a voltage the value of which is between the voltage value corresponding to white and the voltage value corresponding to the transparent color is applied to a liquid crystal portion, the liquid crystal portion shows a half-transparent shade of gray 27 because the liquid crystal portion moderately disperses incident light. Therefore, by applying voltages that have various values between the voltage value corresponding to white and the voltage value corresponding to the transparent color, various shades of gray between the transparent color and the white can be displayed.

As described above, it becomes clear that it is difficult to improve the quality of images displayed in such a transparent display with the use of image adjustment similar to that performed in the related art. Therefore, image adjustment with respect to the following items will be examined hereinafter in this embodiment of the present invention.

(1) Adjustment based on an experiment for examining a visual quality of displayed images
(2) Adjustment based on a data analysis of monochrome images
(3) Adjustment based on examination results of hysteresis

In an ordinary liquid crystal color display apparatus, color data is generated from three primary colors, that is, red, green, and blue. The polymer-dispersed liquid crystal device in this embodiment of the present invention is currently capable of displaying only monochrome images, so that the color data has to be converted into monochrome data in order to be displayed. Therefore, a formula to convert the color data into the monochrome data will be examined below.

$$(i)\ Y = 0.3 * R + 0.6 * G + 0.1 * B$$

(In this formula, luminance Y is obtained as a sum of R, G, and B multiplied by individually predefined coefficients, where Y, R, G, B represent the monochrome data, red data, green data, and blue data respectively.)

$$(ii)\ Y = 1/3 * R + 1/3 * G + 1/3 * B$$

(In this formula, the luminance Y is obtained as a sum of R, G, and B each multiplied by the same number of 1/3.)

$$(iii)\ Y = G$$

(In this formula, the luminance data Y is set to be equal to G as a result of taking into consideration the fact that typically G, the green data, has the largest luminance component.)

Experiments performed by the inventor have revealed that the conversion formula (i) is the most suitable for the conversion for the transparent display according to this embodiment of the present invention. Therefore, the following discussions will be carried out under the assumption that the conversion formula (i) is adopted. It does not mean, however, that the conversion formulas (ii), (iii), and other conversion formulas are not applicable to the present invention.

There are two relations between input white/black data and transparent color/white to be displayed in the case where an ordinary monochrome image is displayed on the transparent display, and one of the two relations has to be decided upon as an assumption for the following discussions. The two relations are as follows:

(a) The input black datum is displayed as the transparent color, and the input white datum is displayed as white.
(b) The input white datum is displayed as the transparent color, and the input black datum is displayed as white.

In this embodiment of the present invention, the following discussions will be carried out under the assumption that relation (a) is used. It does not mean, however, that relation (b) is excluded from the present invention.

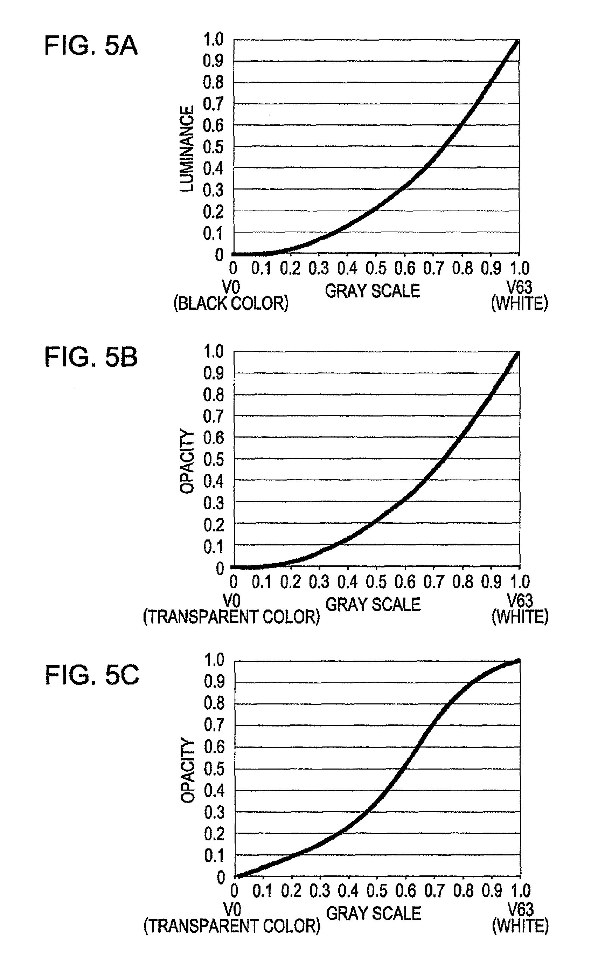

FIG. 5A is a diagram showing an example of a gamma curve for an ordinary LCD display (non-transparent display). An X-axis (horizontal axis) represents gradation values (gray scale values) in the case of the number of the gradation values being 64, and a Y-axis (vertical axis) represents luminance values (brightness values). In FIG. 5A, a luminance value on the Y-axis (horizontal axis) corresponding to a gradation value V0 (black) on the X-axis, that is, a minimum brightness, is set to be 0.0, and a luminance value on the Y-axis corresponding to a gradation value V63 (white) on the X-axis, that is, a maximum brightness, is set to be 1.0. The gamma curve in FIG. 5A shows luminance values on the Y-axis corresponding to the gradation values between V0 (0.0) and V63 (1.0) on the X-axis. Typically, a luminance value can be represented by the following formula using a gamma value.

the luminance value = the $\gamma$th power of the gamma value

It is a common practice to apply a gamma curve such as that shown in FIG. 5A to an ordinary LCD display. FIG. 5B is a diagram showing an example of a gamma curve, which is the same as the gamma curve for the ordinary LCD display in FIG. 5A, applied to an LCD display including the polymer-dispersed liquid crystal device. In the case of an LCD display including the polymer-dispersed liquid crystal device, a Y-axis represents opacity values (non-transparency values) instead of the luminance values, and an X-axis represents gradation values (gray scale values). That is to say, in FIG. 5B and FIG. 5C, an opacity value on the Y-axis (horizontal axis) corresponding to the gradation value V0 (transparent color) on the X-axis, that is, a minimum non-transparency or maximum transmittance, is set to be 0.0, and an opacity value on the Y-axis corresponding to the gradation value V63 (white) on the X-axis, that is, a maximum non-transparency or minimum transmittance, is set to be 1.0. The gamma curve in FIG. 5B shows opacity values on the Y-axis corresponding to the gradation values between V0 (0.0) and V63 (1.0) on the X-axis. When the gamma curve in FIG. 5B was actually applied to the LCD display including the polymer-dispersed liquid crystal device, the entirety of the display was pale (the transparency of the display is dominant), and visibility of displayed images became very poor.

FIG. 5C is a diagram showing an example of a gamma curve according to the embodiment of the present invention. This curve was obtained as a result of examining the above-described three adjustment items, that is, (1) adjustment based on an experiment of the visual quality of displayed images, (2) adjustment based on a data analysis of monochrome images, and (3) adjustment based on the examination results of hysteresis. By applying this gamma curve to the display unit including the polymer-dispersed liquid crystal device, the display unit can provide good visibility of the displays and a good visual quality of the displayed images.

Results of examinations regarding the above three adjustment items will be described hereinafter.

(1) Adjustment based on an experiment for examining a visual quality of displayed images

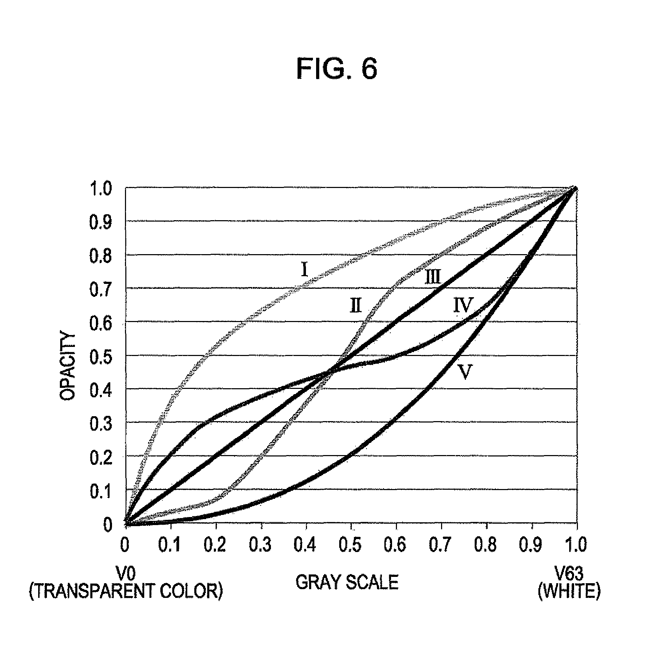

In this adjustment, visual qualities of displayed images with the use of gamma curves of five patterns shown in FIG. 6 were examined on the actual display screen.

I $\gamma$=1/2.2
II S-shaped curve
III $\gamma$=1.0
VI reverse S-shaped curve
V $\gamma$=2.2

A evaluation result obtained through visual examinations by the inventor has revealed that an S-shaped curve is the most appropriate for the polymer-dispersed liquid crystal device. In other words, by applying the S-shaped gamma curve to the LCD display including the polymer-dispersed liquid crystal device, the visual quality of the displayed images can be improved. In the S-shaped gamma curve, as shown in the curve II, when a gray scale value changes from 0.0 (corresponding to the transparent color V0) to 1.0 (corresponding to the white V65) on the X-axis, an opacity value varies (from the minimum opacity value 0.0 to the maximum opacity value 1.0) with the gray scale value, and the increasing rate of the opacity value goes up with the gray scale value between 0.0 to a value around the intermediate value of the gray scale (0.45 in this example), thereby showing an increscent curve, and the increasing rate of the opacity value goes down with the gray scale value between the value around the intermediate value of the gray scale to 1.0, thereby showing a decrescent curve.

When the gamma curve given by I or III was actually applied to the LCD display, the entirety of the display became too whitish to obtain good visibility of the displayed images. The gamma curve given by IV provided distorted images. In addition, the gamma curve given by V caused the display to be too pale to obtain good visibility of the displayed images.

(2) Adjustment based on data analysis of monochrome images

The adjustment based on a data analysis of monochrome images is performed after calculation of data analysis results is completed on the basis of a method for monochrome data analysis described below.

In the method of monochrome image data analysis, firstly, color data included in each pixel of an input image is converted into monochrome data with the use of the above conversion formula. That is

$$Y = 0.3 * R + 0.6 * G + 0.1 * B.$$

Secondary, the number of pixels used for each gradation value is counted for an image, which is based on the monochrome data, obtained after the conversion. By performing this operation for a large number of images, which are based on monochrome data, obtained after the conversion, statistical data for the relation between the gray scale values and numbers of corresponding pixels is calculated.

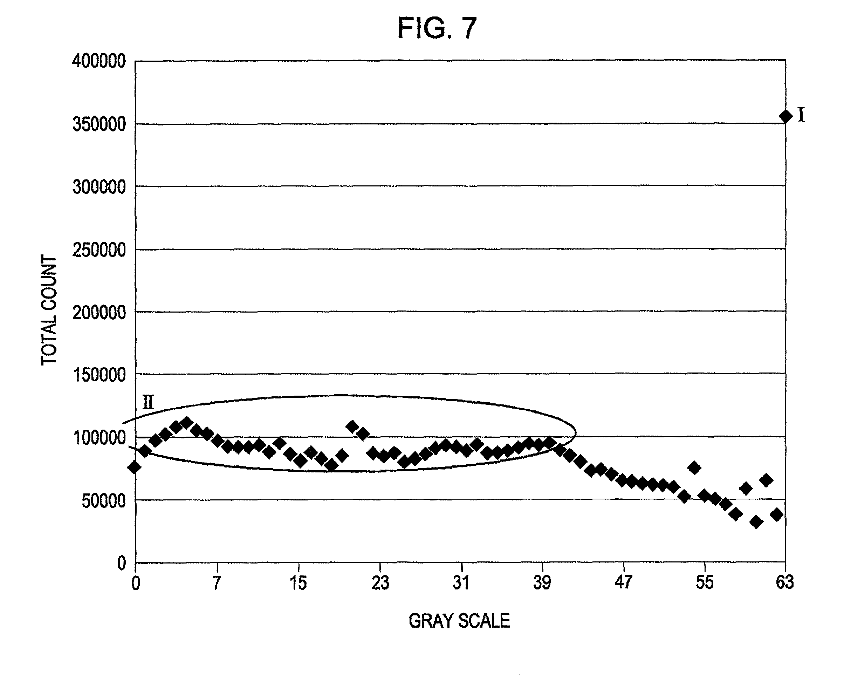

FIG. 7 is a graph showing an example of the statistical result. An X-axis shows the gray scale values (the gradation value V0 to V63), and a Y-axis shows the counts. This example shows a total count corresponding to each gradation value extracted from monochrome image data obtained from seventy pictures (figure pictures and landscape pictures) and plural images on web screens. This graph shows that, among the sixty four gradation values, (1) the gradation value V63 appears with overwhelming frequency, and (2) each gradation value between the gradation value V0 and V40 appears with considerable frequency. Therefore, it is thinkable that broadening a dynamic range for an input gradation range between the gradation value V0 to V40 leads to the improvement of the visibility of the displayed images. That is to say, an opacity range corresponding to the gradation range between the gradation value V0 to V40 is set to be wide, and an opacity range corresponding the gradation range over the gradation value 40 is set to be narrow. To put it in a general way, an output gradation range corresponding to a first input gradation range from an input gradation value corresponding to the transparent color to a predefined gradation value is set to be wider than a linear output gradation range corresponding to the first input gradation range, and an output gradation range corresponding to a second input gradation range from the predefined gradation value to an input gradation value corresponding to the white is set to be narrower than a linear output gradation range corresponding to the second input gradation range. Here, both of the linear output gradation range corresponding to the first input gradation range and the linear output gradation range corresponding to the second input gradation range are obtained from the linear relation between the input gradation values and the output gradation values.
The linear relation between the input gradation values and the output gradation values is the relation obtained in the case of γ being 1.0.
The above-described adjustment is performed with the use of the S-shaped curve in FIG. 6 showing that the increasing rate of the opacity value corresponding to an input gradation range around the input gradation value V63(white) goes down.

(3) Adjustment based on examination results of hysteresis

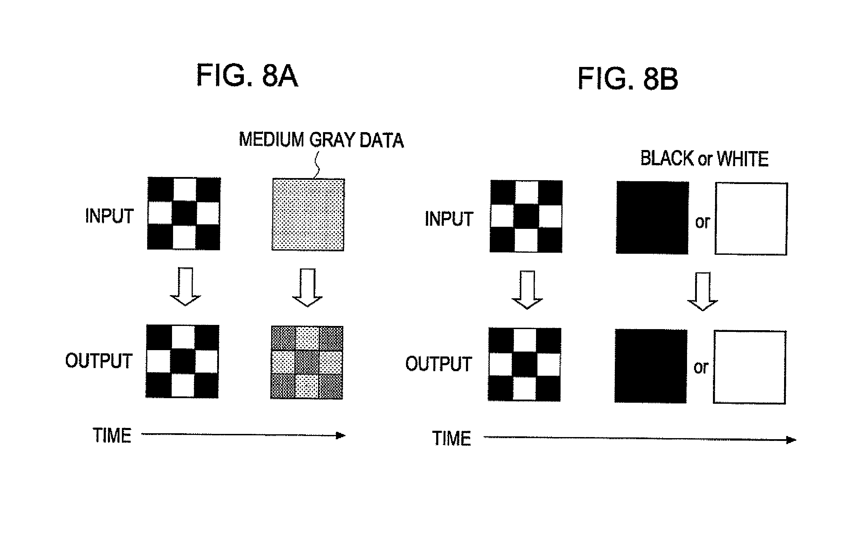

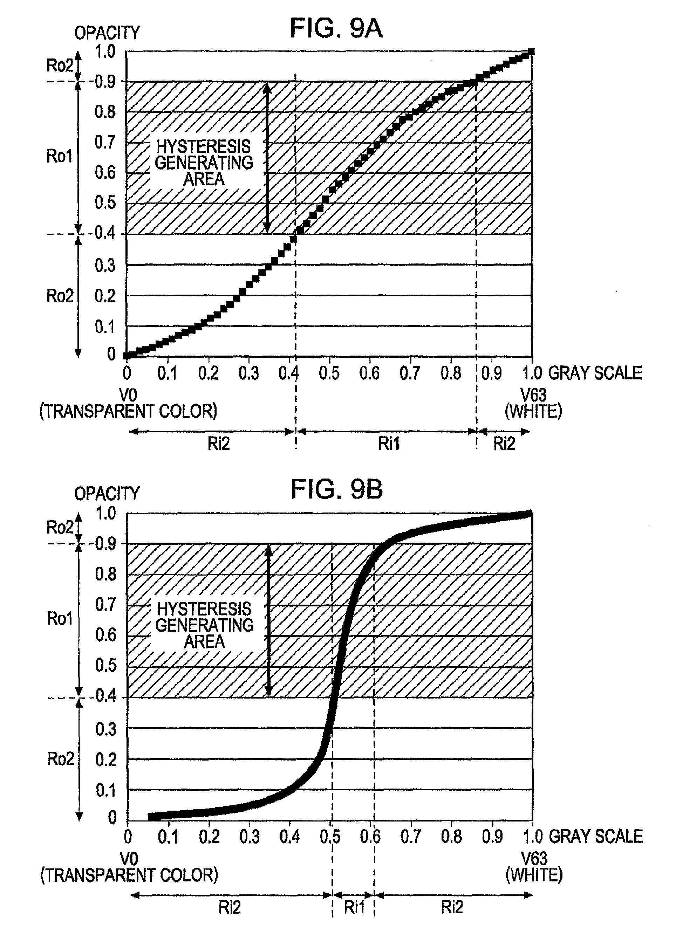

FIG. 8A is an explanatory diagram showing an example of a hysteresis generated in the polymer-dispersed liquid crystal device, FIG. 8B is an explanatory diagram showing another example of the hysteresis generated in the polymer-dispersed liquid crystal. The hysteresis in this case means a phenomenon that an incoming image to be displayed is affected by a previously displayed image. For example, if an input image is a checkered pattern composed of white and black (transparent color in the case of a polymer-dispersed LCD display), the image is displayed as it is on the polymer-dispersed LCD display as shown in FIG. 8A. Next, if a homogeneous image of an intermediate gradation (an intermediate shade of gray) is input, an image with a pale checkered pattern is displayed on the polymer-dispersed LCD display. In other words, when a color displayed by input image data changes from black (transparent color) to gray, or when a color displayed by input image data changes from white to gray, because a firstly displayed color palely remains in a secondly displayed gray, the displayed grays in both cases are slightly different from each other, which causes previously displayed images to be easily recognized.
However, such a phenomenon typically occurs when incoming input image data represents gray, and it does no occur when the incoming input image data represents white or black (transparent color)(See FIG. 8B).
A method to reduce the effect of such a hysteresis will be described below with reference to FIG. 9A and FIG. 9B.
FIG. 9A (with an X-axis and a Y-axis similar to those shown in FIG. 5A, FIG. 5B, or FIG. 5C) shows an opacity range that is easily affected by the hysteresis (a range from an opacity value 0.4 to 0.9 on the Y-axis in this example) as a gray area (hysteresis generating area). As shown in FIG. 9B, by making the slope of an intermediate part of a gamma curve residing in the gray area (hysteresis generating area) steep, a input gradation range where the hysteresis may be generated is narrowed. As a result, the generation of the hysteresis can be reduced. To put it in a general way, when an input gradation value changes from a value within a second input gradation range that is located outside a first input gradation range to a value within the first input gradation range, if an output display within a first output gradation range corresponding the value within the first input gradation range is affected by an output display within a second output gradation range corresponding the value within the second input gradation range, the input gradation range corresponding to the first output gradation range is set to be narrower than a linear input gradation range corresponding to the first output gradation range.
In addition, the above-described adjustments (1), (2), and (3) are independent from each other, so each of them can be employed independently. However, if some of the adjustments are employed at a time, there is a possibility that one adjustment contends against another (they do not go together). A gamma curve shown in FIG. 5C was a curve finally obtained as a result of the compromise among these adjustments. How to find a compromise is decided on the basis of the intended usage or purpose of the gamma curve.

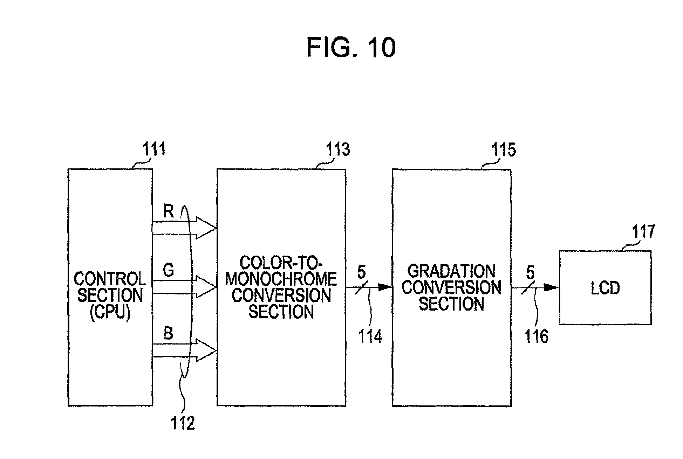

FIG. 10 is a block diagram showing a schematic configuration of main sections of the liquid crystal module for adjusting an image quality according to the embodiment of the present invention.
A control section, which is composed of a CPU, a memory, and the like, feeds RGB data 112 that represents a color image to be displayed to the color-to-monochrome conversion section 113. The color-to-monochrome conversion section 113 converts the RGB data 112 to gradation data 114 (5-bit data in this example) using the above-described conversion formula. Next, the gradation data 114 is fed to a gradation conversion section 115 to undergo gamma correction, and gradation data 116 is obtained after the conversion. That is to say, the gradation conversion section 115 converts plural input gradation data values (V0 to V63) between the transparent color to the white into plural output gradation values (opacity values 0.0 to 1.0) between the minimum opacity and maximum opacity. The gradation data 116 composed of the output gradation values is fed to an LCD 117.

The color-to-monochrome conversion section 113 and the gradation conversion section 115 can make use of look-up tables (LUTs) that are used for converting input data into output data. Data included in such look-up tables are stored in nonvolatile rewritable memories, and the data can be rewritten by the control section 111. In an example shown in FIG. 10, it is assumed that both of the input data and output data to/from the look-up tables are 5-bit data, but it is not necessary that both have the same bit length.

In this embodiment of the present invention, the gradation conversion section 115 is included in the liquid crystal driving section 60 (in FIG. 4). The color-to-monochrome conversion section 113 can be included in the liquid crystal driving section 60 or in the control section 111.

According to the embodiment of the present invention, if a gamma curve proprietary to a transparent display equipped with a polymer-dispersed liquid crystal device is applied to the transparent display, an improved visual quality of displayed images and easiness for a user to recognize displayed information can be obtained.

Although the present invention has been described in its preferred embodiment up to now, various changes and modifications may be made. For example, as a cellular phone terminal, a so-called straight terminal has been described, but the present invention can be applied to other types of cellular phone terminals such as a flip phone terminal and a sliding phone terminal. The sliding phone terminal, as well as the flip phone terminal, includes an upper chassis and a lower chassis. In this case, one of the chassis (for example, the upper chassis) includes a transparent display.

The present application contains subject matter related to that disclosed in Japanese Priority Patent Application JP 2009-257533 filed in the Japanese Patent Office on November 10, 2009.

It should be understood by those skilled in the art that various modifications, combinations, sub-combinations and alterations may occur depending on design requirements and other factors insofar as they are within the scope of the appended claims.

**Claims**

1. A liquid crystal module comprising:

   a liquid crystal panel that performs gradation display between a transparent color and a white color using a polymer-dispersed liquid crystal device; and
   a driving section that drives the liquid crystal panel, wherein
   the driving section includes a gradation conversion section that relates a plurality of input gradation values between the transparent color and the white color with a plurality of output gradation values between a minimum opacity and a maximum opacity individually, the gradation conversion section employing an S-shaped curve that defines the relation between the input gradation values and the output gradation values.

2. The liquid crystal module according to claim 1, wherein
   an output gradation range corresponding to a first input gradation range from an input gradation value corresponding to the transparent color to a predefined gradation value is set to be wider than a linear output gradation range corresponding to the first input gradation range, and
   an output gradation range corresponding to a second input gradation range from the predefined gradation value to an input gradation value corresponding to the white is set to be narrower than a linear output gradation range corresponding to the second input gradation range.

3. The liquid crystal module according to claim 1, wherein,
   when an input gradation value changes from a value within a second input gradation range that is located outside a first input gradation range to a value within the first input gradation range, if an output display within a first output gradation range corresponding the value within the first input gradation range is affected by an output display within a second output gradation range corresponding the value within the second input gradation range, the input gradation range corresponding to the first output gradation range is set to be narrower than a linear input gradation range corresponding to the first output gradation range, wherein.

4. An electronic apparatus comprising:

   a liquid crystal panel that performs gradation display between transparent color and white using a polymer-dispersed liquid crystal device; and
   a driving section that drives the liquid crystal panel, wherein

the driving section includes a gradation conversion section that relates a plurality of input gradation values between the transparent color and the white with a plurality of output gradation values between a minimum opacity and a maximum opacity individually, the gradation conversion section employing an S-shaped curve that defines the relation between the input gradation values and the output gradation values.

5. The electronic apparatus according to claim 4, wherein
an output gradation range corresponding to a first input gradation range from an input gradation value corresponding to the transparent color to a predefined gradation value is set to be wider than a linear output gradation range corresponding to the first input gradation range, and
an output gradation range corresponding to a second input gradation range from the predefined gradation value to an input gradation value corresponding to the white is set to be narrower than a linear output gradation range corresponding to the second input gradation range.

6. The electronic apparatus according to claim 4, wherein,
when an input gradation value changes from a value within a second input gradation range that is located outside a first input gradation range to a value within the first input gradation range, if an output display within a first output gradation range corresponding the value within the first input gradation range is affected by an output display within a second output gradation range corresponding the value within the second input gradation range, the input gradation range corresponding to the first output gradation range is set to be narrower than a linear input gradation range corresponding to the first output gradation range.

# FIG. 1A

# FIG. 1B

## FIG. 2A

## FIG. 2B

# FIG. 3A

# FIG. 3B

# FIG. 4

FIG. 5A

FIG. 5B

FIG. 5C

# FIG. 6

# FIG. 7

EP 2 320 267 A1

# FIG. 8A

# FIG. 8B

INPUT

MEDIUM GRAY DATA

OUTPUT

TIME ⟶

INPUT

BLACK or WHITE

or

OUTPUT

or

TIME ⟶

EP 2 320 267 A1

## FIG. 9A

## FIG. 9B

# FIG. 10

Europäisches
Patentamt
European
Patent Office
Office européen
des brevets

**EUROPEAN SEARCH REPORT**

Application Number

EP 10 16 7295

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2009/040611 A2 (NOKIA CORP [FI]; HYYTIAEINEN IIKKA ANTERO [FI]) 2 April 2009 (2009-04-02) * pages 2,6; figures 1-4,6 * * pages 14-15 * | 1-6 | INV. G02F1/1334 |
| Y | US 2006/139270 A1 (HONG HEE J [KR] ET AL HONG HEE JUNG [KR] ET AL) 29 June 2006 (2006-06-29) * paragraphs [0001], [0006] - [0008], [0035] - [0038]; figures 1,3,4,6,7 * | 1-6 | |
| Y | GB 2 408 138 A (LG PHILIPS LCD CO LTD [KR]) 18 May 2005 (2005-05-18) * paragraphs [0069] - [0071], [0080] - [0100]; figures 1-13 * | 1-6 | |
| A | JP 5 153530 A (TOSHIBA CORP) 18 June 1993 (1993-06-18) * abstract; figures 1-8 * | 3,6 | |
| A | US 2004/263467 A1 (KITAGAWA MAKOTO [JP] ET AL) 30 December 2004 (2004-12-30) * paragraphs [0001] - [0007], [0032], [0037], [0047] - [0048], [0056]; figures 1,3,6-8 * | 1,4 | TECHNICAL FIELDS SEARCHED (IPC) G02F G09G |

The present search report has been drawn up for all claims

| Place of search | Date of completion of the search | Examiner |
|---|---|---|
| The Hague | 8 September 2010 | Pichon, Jean-Michel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 10 16 7295

This annex lists the patent family members relating to the patent documents cited in the above-mentioned European search report.
The members are as contained in the European Patent Office EDP file on
The European Patent Office is in no way liable for these particulars which are merely given for the purpose of information.

08-09-2010

| Patent document cited in search report | | Publication date | Patent family member(s) | | Publication date |
|---|---|---|---|---|---|
| WO 2009040611 | A2 | 02-04-2009 | US | 2010220280 A1 | 02-09-2010 |
| US 2006139270 | A1 | 29-06-2006 | CN | 1797533 A | 05-07-2006 |
| | | | KR | 20060076052 A | 04-07-2006 |
| GB 2408138 | A | 18-05-2005 | CN | 1619629 A | 25-05-2005 |
| | | | DE | 102004031438 A1 | 23-06-2005 |
| | | | FR | 2862420 A1 | 20-05-2005 |
| | | | JP | 4279215 B2 | 17-06-2009 |
| | | | JP | 2005148710 A | 09-06-2005 |
| | | | KR | 20050047354 A | 20-05-2005 |
| | | | TW | 291158 B | 11-12-2007 |
| | | | US | 2005104842 A1 | 19-05-2005 |
| JP 5153530 | A | 18-06-1993 | NONE | | |
| US 2004263467 | A1 | 30-12-2004 | CN | 1577464 A | 09-02-2005 |
| | | | JP | 2005017566 A | 20-01-2005 |
| | | | KR | 20050001417 A | 06-01-2005 |
| | | | TW | 251802 B | 21-03-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5100118 A
- JP 2009257533 A